# EUROPÄISCHE PATENTSCHRIFT

(11) **EP 4 444 490 B1**
(45) Veröffentlichungstag und Bekanntmachung des Hinweises auf die Patenterteilung: **16.07.2025**
(21) Anmeldenummer: 23767829.7
(22) Anmeldetag: 01.09.2023
(51) Int. Cl.: B22F 3/00, B22F 3/105, F27B 3/08, F27D 99/00, B32B 18/00, C04B 35/053, C04B 35/057, C04B 35/117, C04B 35/12, C04B 35/14, C04B 35/443, C04B 35/488, C04B 35/50, C04B 35/505, C04B 35/56, C04B 35/563, C04B 35/565, C04B 35/58, C04B 35/581, C04B 35/584, F27B 9/06, F27B 14/06

(54) **KOMBINATION ELEKTRISCHER HEIZELEMENTE, ENTHALTEND EINEN VERBUNDWERKSTOFF, MIT MIKROWELLEN-PLASMABRENNERN FÜR HOCHTEMPERATURANWENDUNGEN IN DER METALLURGIE, IN DER CHEMISCHEN INDUSTRIE UND IN DER ZEMENTINDUSTRIE, UND VERFAHREN ZUR THERMISCHEN BEHANDLUNG**
COMBINATION OF ELECTRIC HEATING ELEMENTS, CONTAINING A COMPOSITE MATERIAL, WITH MICROWAVE PLASMA TORCHES FOR HIGH-TEMPERATURE APPLICATIONS IN METALLURGY, IN THE CHEMICAL INDUSTRY AND IN THE CEMENT INDUSTRY, AND PROCESS OF THERMAL TREATMENT
COMBINAISON D'ÉLÉMENTS CHAUFFANTS ÉLECTRIQUES CONTENANT UN MATÉRIAU COMPOSITE AVEC DES TORCHES À PLASMA À MICRO-ONDES POUR APPLICATIONS À HAUTE TEMPÉRATURE EN MÉTALLURGIE, DANS L'INDUSTRIE CHIMIQUE ET DANS L'INDUSTRIE DU CIMENT, ET PROCÉDÉ DE TRAITEMENT THERMIQUE

(30) Priorität: 02.09.2022 DE 102022122280
(43) Veröffentlichungstag der Anmeldung: 16.10.2024
(73) Patentinhaber: Technische Universität Bergakademie Freiberg, 09599 Freiberg (DE)
(72) Erfinder: ANEZIRIS, Christos G., 09599 Freiberg (DE); DUDCZIG, Steffen, 09599 Freiberg (DE); GEHRE, Patrick, 09599 Freiberg (DE); HUBÁLKOVÁ, Jana, 09599 Freiberg (DE); WEIGELT, Christian, 09599 Freiberg (DE)
(74) Vertreter: Kailuweit & Uhlemann Patentanwälte Partnerschaft mbB
(86) Internationale Anmeldenummer: PCT/EP2023/074039
(87) Internationale Veröffentlichungsnummer: WO 2024/047232

(56) Entgegenhaltungen:
- KIM SANGRYUN ET AL: "Development of ultra-high temperature SHS furnace using atmospheric-pressure microwave steam plasma", APPLIED THERMAL ENGINEERING, PERGAMON, OXFORD, GB, vol. 52, no. 1, 17 November 2012 (2012-11-17), pages 1 - 7, XP028969354, ISSN: 1359-4311, DOI: 10.1016/J.APPLTHERMALENG.2012.11.008

## Beschreibung

Die Erfindung betrifft Hochtemperaturanwendungen in der Metallurgie, in der chemischen Industrie und in der Zementindustrie.

Vereinfacht zusammengefasst wird das zu erhitzende Gut aufgrund der sehr hohen Temperaturen von >1000°C, die nötig sind, in einem Gefäß mit einer Auskleidung erhitzt.

Zum Aufheizen kommen verschiedene Methoden in Betracht.

Von Scheele, J. et al. beispielsweise (Konferenzpapier: Hydrogen Steelmaking Solutions for Melting, Reheating, and Gasification, 20. November 2020, 9-10. https://www.researchgate.net/publication/349215137 [online]) beschreiben einen Wasserstoff-Gasbrenner zum Vorheizung in Schmelzöfen. Wasserstoffverbrennung zum Aufheizen bietet ein großes Einsatzpotential bzgl. Platzbedarf im Sinne der Energie-speicherung. Ein Nachteil beim Einsatz von Wasserstoff ist die Bildung von Wasserdampf und dessen Wechselwirkung mit den anorganischen Werkstoffen.

In DE 38 73 193 T2 wird ein plasmaunterstützendes Verfahren zur Puderproduktion beschrieben. In US 7 189 940 B2 sowie US 7 638 727 B2 werden ein Gerät und eine Methode für ein Plasmaunterstützendes Schmelzen bzw. eine plasmaunterstützende Wärmebehandlung offenbart. US 2006 / 0 057 016 A1 beschreibt einen plasmaunterstützenden Sinterprozess und System. In US 7 445 817 B2 wird ein plasmaunterstützender Prozess zur Erzeugung von Kohlenstoffstrukturen dargestellt. EP 0 357 655 B1 beschreibt eine zusätzliche Erhitzung mittels Elektroplasma.

Die vorgestellten Erfindungen haben gemein, dass für den Energieeintrag für die beschriebenen Hochtempertaturprozesse ein Plasma bzw. Plasmabrenner zum Einsatz kommt. Durch den raschen, hohen Energieeintrag beim Einsatz von Plasmabrennern entstehen jedoch thermomechanische Spannungen auf den feuerfesten Auskleidungen der Oberflächen bzw. im Gefäß/Ofenaggregat, was deren Lebensdauer erheblich reduzieren kann.

Viele Keramiken, die als feuerfeste Auskleidungen zum Einsatz kommen, z.B. Aluminiumoxid, besitzen sehr gute chemische Eigenschaften in korrosiven Medien (u.a. in zahlreichen metallurgischen und chemischen Prozessen auch unter Wasserstoff/Wasserdampfbedingungen), sind oxidationsbeständig (wenn diese z.B. kohlenstofffrei sind), zeigen keine negativen Clogging-Eigenschaften (Verjüngung der Gießquerschnitte infolge einer Aluminiumoxidansatzbildung bei Ausgussdüsen und Tauchausgüssen durch die Wechselwirkung von Kohlenstoff/Oxidkeramik in Kontakt mit metallischen Schmelzen) und besitzen bei einer hohen Reinheit (SiO₂-, TiO₂-, Na-frei) eine sehr gute Kriechbeständigkeit mit einem hohen Druckerweichungspunkt.

Allerdings weisen beispielsweise solche reinen, oft kohlenstofffreien Werkstoffe als feuerfeste Auskleidung des Gefäßes/Schmelzgefäß bzw. der Oberflächen eine geringe Thermoschockbeständigkeit und keine elektrische Leitfähigkeit bei Temperaturen unterhalb 800 °C auf.

DE 10 2012 003 4 83 offenbart einen thermoschock- und korrosionsbeständigen Keramikwerkstoff als feuerfeste Auskleidung auf der Basis von Calciumzirkonat, wobei der Werkstoff aus vorsynthetisiertem calciumzirkonat-haltigen Brechgranulat einer Korngröße von 150 µm bis 6 mm mit einem Anteil größer 50 Gew.-% und einer das Brechgranulat umgebenden bei >1300 °C gesinterten Bindematrix aus feinkörnigem Calciumzirkonat und/oder Zirkonoxid mit Korngrößen zwischen 50 nm und 150 µm besteht.

WO 2018/087224 A1 offenbart einen Verbundwerkstoff und Verfahren aus Metall und Keramik oder MAX-Phasen bzw. intermetallische Phasen, welche als Auskleidungsmaterialien für Hochtemperaturaggregate, makrorissfreie großformatige Bauteile z. B. als Auslaufdüsen, Stopfen, Gießrinnen, Schieberplatten, Hitzeschilder, Elektroden für die Metallurgie mit einer offenen Porosität von bis zu 20 % hergestellt werden. Allerdings sind diese metallokeramischen, thermoschockbeständigen Verbundwerkstoffe in Kontakt mit aggressiven Metall- oder Metall/Schlacke-Systemen nicht korrosionsbeständig.

Kim et al.("Development of ultra-high temperature SHSfurnace using atmospheric-pressure microwave steam plasma"; Applied Thermal Engineering 52 (2013) 1-7, http://dx.doi.Org/I0.10I6/j.applthermaleng.2012.II.008) beschreibt einen SHS (super heated steam)-Ofen mit einem Mikrowellendampfplasma als Wärmequelle. Dabei wird ein elektrisches Heizelement zur Erhitzung des Dampfes genutzt, der dann in die Entladungsröhre zur weiteren Plasmaerzeugung geleitet wird.Aufgabe der Erfindung ist es, eine optimierte Lösung für Hochtemperaturanwendungen bereitzustellen. Die Auskleidungen auf den Oberflächen der dabei genutzten Gefäße oder Bauteile sollen beim Aufheizen keine Risse bilden. Die Erfindung soll somit das Aufheizen, insbesondere der Auskleidungen, die gängiger Weise aus Keramik, Feuerfestkeramik oder Refraktärmetall bestehen, auf Oberflächen so erlauben, dass diese Auskleidungen dabei keine Beschädigungen aufgrund von Thermoschockempfindlichkeit erfahren. Die Erfindung soll ökologisch sein und CO₂-arm arbeiten. Insbesondere soll sie auf gefährliche Gase und die damit einhergehenden Sicherheitsanforderungen an Transport und Speicherung verzichten.

Erfindungsgemäß wird die Aufgabe mit den Merkmalen der unabhängigen Ansprüche gelöst. Vorteilhafte Ausgestaltungen der Erfindung sind in den abhängigen Ansprüchen angegeben.

Gegenstand der Erfindung ist eine Vorrichtung zur thermischen Behandlung, Sinterung oder Schmelzen von anorganischen Rohstoffen (mit oder ohne Kohlenstoff oder weiteren organischen Zusätzen) oder zur Herstellung, Sinterung oder thermischen Nachbehandlung von Keramiken, Feuerfestkeramiken (bspw. Magnesiumoxidstein aus MgO), technischen Keramiken (bspw. Zirkoniumdioxidkeramik aus ZrO₂), Baukeramiken (wie Ziegel oder Fliesen), Glas, Zement, Metallen, Verbundwerkstoffen oder kohlenstoffhaltigen oder kohlenstoffgebundenen Erzeugnissen, umfassend
a) eine Oberfläche mit Auskleidung (wie bspw. in einem Gefäß, in dem die Materialien hitzebehandelt werden, oder an Bauteilen innerhalb der Vorrichtung/Hochtemperaturanlage, die mit den heißen Materialien in Berührung kommen; das können zum Beispiel sein: ein Ofenaggregat, ein Behandlungsaggregat, eine Pfanne, ein Verteiler oder auch andere Reaktoraggregate),
b) ein elektrisches Heizelement (mindestens eins), und
c) einen Mikrowellen-Plasmabrenner (mindestens einen),

Bei der "Sinterung" bleibt bekanntermaßen die Temperatur immer unterhalb der jeweiligen Schmelztemperatur der zu behandelnden Materialien/Mischungen, im Bereich des 0,5- bis 0,8-Fachen der Schmelztemperatur; insbesondere meist bei 2/3 der Schmelztemperatur (±10 des Wertes).

"Elektrisches Heizelement" im Sinne der Erfindung bedeutet elektrisch beheizbares Heizelement. Sie wird bekanntermaßen von elektrischer Energie durchströmt und wandelt diese in thermische Energie um, also in Wärme. Es beinhaltet eine stromdurchflossene Heizwendel, die gegenüber dem zu erwärmenden Stoff elektrisch isoliert ist. Sinnvollerweise weist es zwei Elektroden auf, bevorzugt Wolfram-Elektroden.

Das elektrische Heizelement ragt sinnvollerweise nicht direkt in den Ofenraum (der Hochtemperaturanlage), sondern endet innerhalb der Auskleidung, da es sonst sehr schnell kaputtgehen würden.

Die Auskleidung der Oberfläche (welche mit den hohen Temperaturen in Berührung kommt) kann beispielsweise eine Auskleidung aus Keramik oder Feuerfestkeramik (beide werden als feuerfeste Auskleidung bezeichnet oder aus Refraktärmetallen (wie Wolfram, Molybdän, Niob, Tantal) sein. Als Keramik wird alles verstanden, was nicht aus Metall oder Kunststoff besteht - es sind anorganische, nicht-metallische Werkstoffe, welche mit Hilfe eines Urformgebungsverfahrens in Bauteilen geformt werden und anschließend gesintert werden und damit ihre Endeigenschaften erlangen. Feuerfestkeramiken besitzen einen Kegelfallpunkt von >1500°C, wobei der Kegelfallpunkt in der Regel mit dem Erweichungspunkt übereinstimmt. Refraktärmetalle sind hochschmelzend.

Das elektrische Heizelement, bzw. der in weiter unten beschriebenen bevorzugten Ausführungsformen genannte Heizelement-Werkstoffverbundverbund, und die Auskleidung (bspw. als feuerfeste Auskleidung) bestehen entweder aus a) feinen Körnungen oder Kristallitgrößen kleiner 100 µm oder b) aus feinen Körnungen bzw. feinen Kristallitgrößen kleiner 100 µm und aus groben Körnungen bzw. groben Kristallitgrößen größer gleich 100 µm.

Gegenstand der Erfindung ist des Weiteren ein Verfahren zur thermischen Behandlung, Sinterung oder Schmelzen von anorganischen Rohstoffen oder zur Herstellung, Sinterung oder thermischen Nachbehandlung von Keramiken, Feuerfestkeramiken, technischen Keramiken, Baukeramiken, Glas, Zement, Metallen, Verbundwerkstoffen oder kohlenstoffhaltigen oder kohlenstoffgebundenen Erzeugnissen, mit dem Schritt:
Aufheizen (dieser zu behandelnden Materialien) auf einer Oberfläche mit einer Auskleidung (bspw. in einem Ofenaggregat, Behandlungsaggregat, Pfanne, Verteiler oder auch Reaktoraggregat),
wobei zum Aufheizen ein elektrisches Heizelement mit einem Mikrowellenplasmabrenner kombiniert wird.

Sinnvollerweise wird zuerst mittels elektrischen Heizelements und später mit dem Mikrowellen-Plasmabrenner geheizt.

Das Aufheizen findet im Falle der Sinterung lediglich bis zu einer Sintertemperatur statt. Diese liegt unterhalb der Schmelztemperatur, wie weiter vorn bereits angegeben.

In Ausführungsformen wird ein elektrischen Heizelements in Kombination mit einem Mikrowellen-Plasmabrenner (zum Aufheizen einer Oberfläche mit Auskleidung) bei
der thermischen Behandlung, Sinterung oder Schmelzen von anorganischen Rohstoffen oder der Herstellung, Sinterung oder thermischen Nachbehandlung von Keramiken, Feuerfestkeramiken, technischen Keramiken, Baukeramiken, Glas, Zement, Metallen, Verbundwerkstoffen oder kohlenstoffhaltigen oder kohlenstoffgebundenen Erzeugnissen; verwendet,

insbesondere im erfindungsgemäßen Verfahren; auch wird die erfindungsgemäße Vorrichtung zu diesem Aufheizen bzw. im erfindungsgemäßen Verfahren verwendet.

Ausführungen für die erfindungsgemäße Vorrichtung und ihre Merkmale gelten in gleicher Weise für das erfindungsgemäße Verfahren und auch für die erfindungsgemäße Verwendung und umgekehrt.

Mit der Erfindung ist es möglich, ein schonendes Aufheizen der Oberfläche mit der Auskleidung zu erreichen, indem zuerst mittels des elektrischen Heizelements vorgeheizt wird und danach mittels des Mikrowellen-Plasmabrenners auf die benötigte Endtemperatur weiter aufgeheizt wird.

Die Erfindung erlaubt es, durch die Kombination des erfindungsgemäßen elektrischen Heizelements mit einem Mikrowellen-Plasmabrenner, den Thermoschock bei dem Aufheizen für die Auskleidung der Oberflächen, die in Kontakt mit den hohen Temperaturen kommt, zu mildern. Vorteilhaft werden dadurch Spannungen verringert und die Wahrscheinlichkeit von Brüchen oder Rissen sinkt. Damit kann die Erfindung für zahlreiche Bauteile in Hochtemperaturanlagen genutzt werden (die Bauteile weisen die Oberflächen mit Auskleidung auf, welche mit den hohen Temperaturen in Kontakt kommt).

Vorteilhaft ist das elektrische Heizelement aufgrund der Regelungstechnik deutlich besser zu kontrollieren. Der Mikrowellen-Plasmabrenner allerdings ist deutlich effizienter hinsichtlich Wärmeübergang als ein elektrisches Heizelement.

Vorteilhaft kann mit der Erfindung auf jeglichen brennbaren Gasen verzichtet werden. Dies betrifft auch die dafür sonst nötigen Sicherheitsvorkehrungen wie bspw. EX-Schutz-vorrichtungen.

Es kommt (bei der Stahlproduktion) vorteilhaft zu keinen Zeit- und Energieverlusten beim Transport des Verteilers über die Gießposition.

Vorteil der Erfindung ist auch, dass das Verfahren und die Vorrichtung vollständig elektrifiziert ablaufen. Es besteht damit die Möglichkeit, ausschließlich mittels Ökostrom zu arbeiten. Es handelt sich bei der Erfindung somit um eine CO₂-arme Hochtemperaturtechnologie.

Vorteilhaft wird, was den Mikrowellenplasmabrenner angeht, die Flamme genutzt, so dass keine Kathode verschleißt.

Der Mikrowellen-Plasmabrenner kann an vorhandene Hochtemperaturanlagen angebracht werden. Die Brennfackel des Mikrowellen-Plasmabrenners ist flexible steuerbar, hat einen hohen Wirkungsgrad von >95% und ist energieeffizient.

Erfindungsgemäß umfasst das
b) elektrische Heizelement einen Heizelement-Werkstoffverbund, wobei dieser Heizelement-Werkstoffverbund umfasst:
b1) eine keramische Außenschale (1) (vorzugsweise aus feinen Körnungen kleiner 100 µm, oder aus feinen und groben Körnungen (grobe Körnung bedeutet ≥ 100 µm), und
b2) einen elektrisch leitfähigen Innenkern (2), auf der Basis einer Keramik, eines Metalls, Kohlenstoffs oder einer intermetallischen Phase oder einer MAX-Phase oder aus Mischungen davon
(wobei verzugsweise der Innenkern aus feinen Körnungen kleiner 100 µm, oder aus feinen (kleiner 100 µm) und groben Körnungen (größer gleich 100 µm) besteht.

Der "Heizelement-Werkstoffverbund" weist vorteilhaft verbesserte Thermoschock-, Korrosions- und Kriecheigenschaften in Kontakt mit Schmelzen und/oder heißen oder korrosiven Gasen, bei Hochtemperaturanwendungen in der Metallurgie, in der chemischen Industrie und in der Zementindustrie auf. Der elektrisch leitfähige Innenkern des Werkstoffverbunds behält auch unter sauerstoffhaltigen Atmosphären bei hohen Einsatztemperaturen, beispielhaft in Anwendungen in der Metallurgie, in der chemischen Industrie oder in der Zementindustrie, seine elektrische Leitfähigkeit bei.

Sinnvollerweise werden für die keramische Außenschale und den elektrisch leitfähigen Innenkern des Werkstoffverbundes (des elektrischen Heizelements) Materialien ausgewählt, welche die gleichen thermischen Ausdehnungskoeffizienten aufweisen, sodass sowohl beim Aufheizen als auch späteren Abkühlen keine Risse an der Grenzfläche Außenschale/Innenkern entstehen können. Das Aufheizen kann damit auch mehrfach erfolgen.

Der Werkstoffverbund weist dementsprechend eine exzellente Temperaturwechselbeständigkeit auf. Darüber hinaus führt das Anlegen einer Spannung an zwei Elektroden des Werkstoffverbunds zu einer Änderung der Benetzungseigenschaften der keramischen Außenschale und damit kann die Korrosionsbeständigkeit gesteigert werden.

Die keramische Außenschale des Werkstoffverbundes (des Heizelements) ist korrosionsbeständig.

Der elektrisch leitfähige Innenkern des Werkstoffverbundes (des Heizelements) ist bereits ab Raumtemperatur elektrisch leitfähig. Er kann Oxidationsschutzschicht(en) um ihn herum aufweisen. In diesem Fall wird bspw. der Innenkern bei seiner Wärmebehandlung (entweder vor oder während des Hochtemperatureinsatzes der Vorrichtung) mittels einer Oxidationsschutzschicht versiegelt und anschließend in die Außenschale gefügt, wobei der Werkstoffverbund anschließend wärmebehandelt wird.

Hinsichtlich des Werkstoffverbunds ist auch umfasst, dass mehrere keramische Außenschalen bzw. mehrere elektrisch leitfähige Innenkerne vorliegen. Bspw. können sich im Werkstoffverbund auch keramische Außenschale und elektrisch leitfähiger Innenkern abwechseln, im Sinne einer Sandwichbauweise aus mehreren Schichten, um die Zuverlässigkeit des Werkstoffverbunds zu erhöhen.

### Bezüglich des Werkstoffverbunds des elektrischen Heizelements:

In einer bevorzugten Variante dieser Ausführungsform der Erfindung ist im Heizelement-Werkstoffverbund des elektrischen Heizelements die keramische Außenschale ausgewählt aus (d.h. die keramische Außenschale umfasst ein Material, ausgewählt aus) SiO₂, Al₂O₃, ZrO₂, Cr₂O₃, MgO, MgAl₂O₄, La₂O₃, TiO₂, CaO, BaO, Y₂O₃, B₄C, ZrB₂, Si₃N₄, AIN und Mischungen davon. Besonders bevorzugt ist sie aus Aluminiumoxid. Sie kann hierbei auch unvermeidbare Bestandteile enthalten, in Mengen von ≤2Ma%, insbesondere auch ≤1Ma%, oder sogar in Spuren von nur ≤0,2Ma%.

In einer weiteren Variante der bevorzugten Ausführungsform der Erfindung enthält der elektrisch leitfähige Innenkern (des Werkstoffverbunds des elektrischen Heizelements): Keramik (wie SiC, LaCrO₃), oder Metalle (wie Cu, Fe, Si, Ni, Ti, Mg, Mn, Sn, Zn, Zr, Hf, V, Nb, Ta, Cr, Mo, W, Tc, Re, Pt), oder Kohlenstoff, oder intermetallischen Phasen (wie MoSi₂, NiAl, TiCr₂, TaFeAl, TbAl, TiAl, FeCr), oder MAX-Phasen (wie, Ti₂Cd_{C}, Sc₂InC, Sc₂SnC, Ti₂AlC, Ti₂GaC, Ti₂InC, Ti₂TlC, V₂AlC, V₂GaC, Cr₂GaC, Ti₂AlN, Ti₂GaN, Ti₂InN, V₂GaN, Cr₂GaN, Ti₂GeC, Ti₂SnC, Ti₂PbC, V₂GeC, Cr₂AlC, Cr₂GeC, V₂PC, V₂AsC, Ti₂SC, Zr₂InC, Zr₂TlC, Nb₂AlC, Nb₂GaC, Nb₂InC, Mo₂GaC, Zr₂InN, Zr₂TlN, Zr₂SnC, Zr₂PbC, Nb₂SnC, Nb₂PC, Nb₂AsC, Zr₂SC, Nb₂SC, Hf₂InC, Hf₂TlC, Ta₂AlC, Ta₂GaC, Hf₂SnC, Hf₂PbC, Hf₂SnN, Hf₂SC, Zr₂AlC, Ti₂ZnC, Ti2ZnN, V₂ZnC, Nb₂CuC, Mn₂GaC, Mo₂AuC, Ti₂AuN Ti₃AlC₂, Ti₃GaC₂, Ti₃InC₂, V₃AlC₂, Ti₃SiC₂, Ti₃GeC₂, Ti₃SnC₂, Ta₃AlC₂, Ti₃ZnC₂, Zr₃AlC₂ , Ti₄AlN₃, V₄AlC₃, Ti₄GaC₃, Ti₄SiC₃, Ti₄GeC₃, Nb₄AlC₃, Ta₄AlC₃, (Mo,V)₄AlC₃), oder Mischungen daraus. Ganz besonders bevorzugt besteht er daraus (wobei, wie oben ausgeführt, unvermeidbare Bestandteile in Mengen von ≤2Ma%, insbesondere auch ≤1Ma%, oder sogar in Spuren von nur ≤0,2Ma% enthalten sein können).

In einer ganz besonders bevorzugten Variante besteht der Innenkern des Werkstoffverbundes aus Kohlenstoff-gebundenem Al₂O₃, oder aus 40Vol% Niob und 60Vol% Al₂O₃ oder aus Molybdändisilizid, oder aus Siliziumkarbid. Es ist dabei umfasst, dass er daneben auch unvermeidbare Elemente enthält, in Mengen von ≤2Vol%, insbesondere auch ≤1Vol%, oder sogar in Spuren von nur ≤0,2Vol%.

In einer ebenfalls bevorzugten Variante der Ausführung ist der Innenkern 0,1-1mm dick.

Hergestellt wird der Werkstoffverbund bevorzugt, indem die keramische Außenschale und der elektrisch leitfähige Innenkern über Vibrationsgießen, Druckschlickergießen, uniaxiales Pressen, kalt-isostatisches Pressen, Extrusion, über 3D-Binder-Jetting-Verfahren, über 3D-Filamentendruck-Verfahren oder über 3D-Verfahren der bildsamen Formgebung einzeln erzeugt werden, einzeln wärmebehandelt werden und nach einem Zusammenfügen gemeinsam wärmebehandelt werden. Es ist auch möglich, beide gleichzeitig oder nacheinander zu gießen, zu pressen, zu extrudieren oder zu drucken und anschließend gemeinsam einmal wärmezubehandeln.

In einer ebenfalls bevorzugten Variante der Ausführungsform umfasst der Heizelement-Werkstoffverbund auch Oxidationsschutzschichten (mindestens eine) um den elektrisch leitfähigen Innenkern herum (d.h. zwischen Innenkern und die ihn umgebende keramische Außenschale). Besonders bevorzugt bestehen diese Oxidationsschutzschichten aus Glasuren, welche bei Temperaturen oberhalb 400 °C aufschmelzen oder aus feinkörnigen Oxidkeramiken mit Korngrößen kleiner 100 µm, die oberhalb 1000 °C dicht sintern, oder aus Oxidschichten, aufgetragen mittels Flammspritztechnologie, oder aus technischen Emaille-Beschichtungen oder aus Kombinationen davon.

Ganz besonders bevorzugt sind die Oxidationsschutzschichten solche, auf Basis von Borax.

Die Oxidationsschutzschichten können auch auf dem Innenkern aufgebracht werden, wobei sie mit einer weiteren Wärmebehandlung dicht werden. Im Falle von kohlenstoffhaltiger Innenkerne können die diese Oxidationsschutzschicht bildenden Komponenten bereits in einer Mischung des Innenkerns vorliegen, welche bei einer anschließenden Wärmebehandlung oder während des Einsatzes im erfindungsgemäßen Aufheizen wegen der Nicht-Benetzbarkeit gegenüber dem Kohlenstoff in die Oberfläche diffundieren und eine dichte Glasurschicht generieren.

Es ist auch möglich, einen bereits wärmebehandelten Innenkern mittels einer Oxidationsschutzschicht vorab zu versiegeln (Auftrag der Schicht mit oder ohne thermische Behandlung) und anschließend in die keramische Außenschale zu fügen. Anschließend wird der Werkstoffverbund thermisch behandelt, so dass ein Werkstoffverbund entsteht, der eine Oxidationsschutzschicht umfasst.

In einer bevorzugten Variante der Ausführungsform der Erfindung umfasst der Werkstoffverbund Oxidationsschutzschichten um den elektrisch leitfähigen Innenkern, wobei im Falle von kohlenstoffhaltigen Innenkernen glasurbildende Komponenten bereits in einer Mischung des Innenkerns vorlagen, welche bei einer anschließenden Wärmebehandlung oder während des Einsatzes der Vorrichtung wegen der Nicht-Benetzbarkeit gegenüber dem Kohlenstoff in die Oberfläche diffundiert sind und eine dichte Glasurschicht generiert haben.

In einer bevorzugten Ausführung der Erfindung wurde bzw. wird das elektrische Heizelement an der Auskleidung der Oberfläche angebracht oder in der Auskleidung integriert.

Bevorzugt ist die Wandstärke der Auskleidung, bspw. als feuerfeste Auskleidung, 1mm bis 1m dick.

### Bezüglich des erfindungsgemäßen Verfahrens:

Das Verfahren der vorliegenden Erfindung ist im unabhängigen Anspruch 6 angegeben.

Besonders bevorzugt wird das elektrische Heizelement bei einer Temperatur im Bereich von 200-1200°C ausgeschalten. Denn das elektrische Heizelement darf bei >1200°C nicht mehr eingeschalten sein.

Erfindungsgemäß umfasst das Aufheizen die folgenden beiden Schritte:
i) Vorheizen mit dem elektrischen Heizelement auf eine erste, niedrige Temperatur im Bereich von 600 bis <1200°C, und
ii) Zuschalten des Mikrowellen-Plasmabrenners ab dieser ersten, niedrigen Temperatur und Aufheizen mit dem Mikrowellen-Plasmabrenner auf eine zweite, hohe Temperatur, im Bereich 1200 bis 2000°C.

Bevorzugt wird der Mikrowellen-Plasmabrenner ab der Temperatur eingeschaltet, bis zu der im Vorheizschritt i) geheizt wurde. Besonders bevorzugt wird ab dieser Temperatur auch das elektrische Heizelement abgeschaltet, so dass dieses vom Mikrowellen-Plasmabrenner abgelöst wird.

In einer weiteren bevorzugten Ausführung werden passive oder aktive Katalysatoren auf die Oberfläche (mit der Auskleidung) gegeben und unterstützen damit das Aufheizen mit dem Mikrowellen-Plasmabrenner in Schritt ii).

### Bezüglich der hergestellten bzw. nachbehandelten Keramiken oder Feuerfestkeramiken:

Bevorzugt enthalten die hergestellten bzw. nachbehandelten Keramiken oder Feuerfestkeramiken Al₂O₃, ZrO₂, Cr₂O₃, SiO₂, MgO, MgAl₂O₄, La₂O₃, TiO₂, CaO, LaCrO₃, CaZrO₃, SiC, B₄C, ZrB₂, Si₃N₄, AIN, C, BaO, BaTiO₃ oder Mischungen davon. Besonders bevorzugt ist die Feuerfestkeramik ausgewählt aus Al₂O₃, ZrO₂, MgO, MgAl₂O₄, TiO₂, CaO, C oder Mischungen davon. Bevorzugt kommen in den Feuerfestkeramiken Metalle mit einem Schmelzpunkt größer 600 °C, wie Cu, Fe, Si, Ni, Ti, Al, Mg oder Mischungen davon, zum Einsatz bzw. sind enthalten.

In einer bevorzugten Ausführungsform der Erfindung ist die Auskleidung der Oberfläche, die mit den hohen Temperaturen in Kontakt kommt, kohlenstofffrei. Vorteilhaft tritt besonders in dieser Ausführungsform die Reduzierung der Rissbildungswahrscheinlichkeit zu Tage. Denn insbesondere kohlenstofffreie Auskleidungen neigen zur Rissbildung beim Aufheizen aufgrund geringer Thermoschockbeständigkeit.

In einer bevorzugten Ausführungsform der Erfindung enthält auch die Auskleidung ein Material ausgewählt aus Al₂O₃, ZrO₂, Cr₂O₃, SiO₂, MgO, MgAl₂O₄, La₂O₃, TiO₂, CaO, LaCrO₃, CaZrO₃, SiC, B₄C, ZrB₂, Si₃N₄, AIN, C, BaO, BaTiO₃ und Mischungen dieser.

In einer bevorzugten Ausführungsform der Erfindung ist beides, elektrisches Heizelement und Mikrowellen-Plasmabrenner in die Auskleidung der Oberfläche (insbesondere eine feuerfeste Auskleidung) integriert.
Fig. 1 zeigt den Querschnitt eines Ofens als erfindungsgemäße Vorrichtung in einer bevorzugten Ausführungsform.
Fig. 2 zeigt ein Verteilergefäß zum kontinuierlichen Gießen von Metallschmelzen oder zum Schmelzen von Metallen, als erfindungsgemäße Vorrichtung in einer bevorzugten Ausführungsform.
Fig. 3 zeigt eine Pfanne zum Transport oder Tiegelofen zum Schmelzen von Metallen als erfindungsgemäße Vorrichtung, in einer bevorzugten Ausführungsform.

Für die Realisierung der Erfindung ist es auch zweckmäßig, die vorbeschriebenen erfindungsgemäßen Ausgestaltungen, Ausführungsformen und Merkmale der Ansprüche miteinander zu kombinieren. Nachfolgend soll die Erfindung anhand von Ausführungsbeispielen eingehender erläutert werden, ohne diese zu beschränken.

### Ausführungsbeispiele

### Ausführungsbeispiel 1:

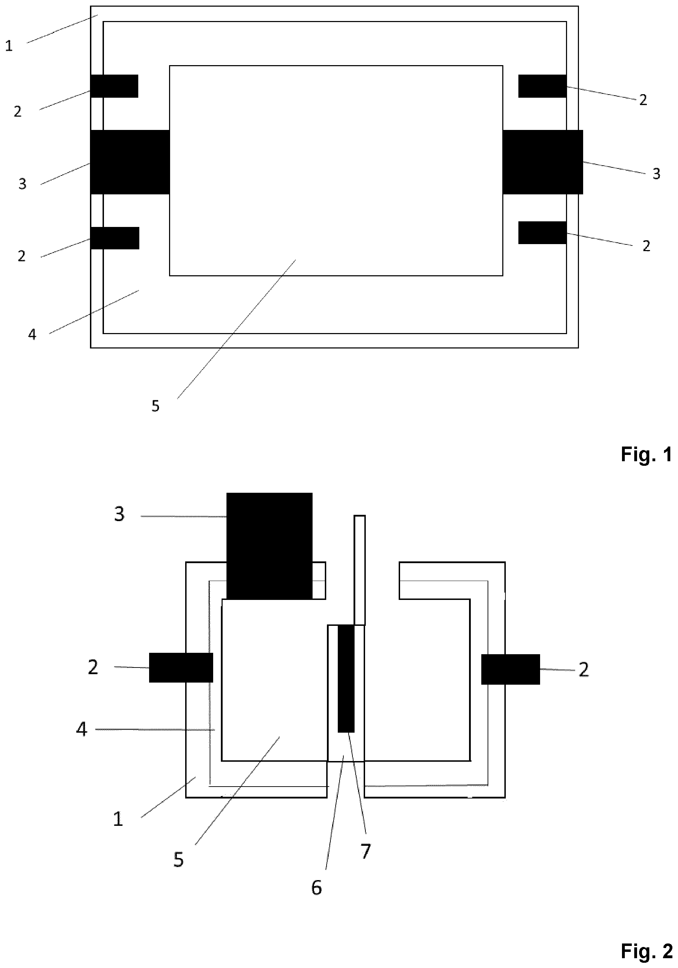

Ausführungsbeispiel 1 wird durch Fig. 1 beschrieben. Dabei wird ein Ofen bereitgestellt mit einem Heizelement-Werkstoffverbunden als elektrische Heizelemente 2, welche in die Auskleidung 4 der Oberfläche ragen, und einen Mikrowellen-Plasmabrenner 3, der bis ins Ofeninnere 5 ragt, so dass die Flamme ins Ofeninnere 5 gelangen kann. Fig. zeigt einen Schnitt eines Ofens.

### Ausführungsbeispiel 2:

Ausführungsbeispiel 2 wird durch Fig. 2 verdeutlicht. Beschrieben wird ein Verteilergefäß für Metallschmelzen. Vorgesehen ist dabei auch ein Stopfen6 , aus dem Material der Auskleidung (es handelt sich hier um eine feuerfeste Auskleidung), wobei auch im Stopfen ein elektrisches Heizelement 7 integriert ist.

### Ausführungsbeispiel 3:

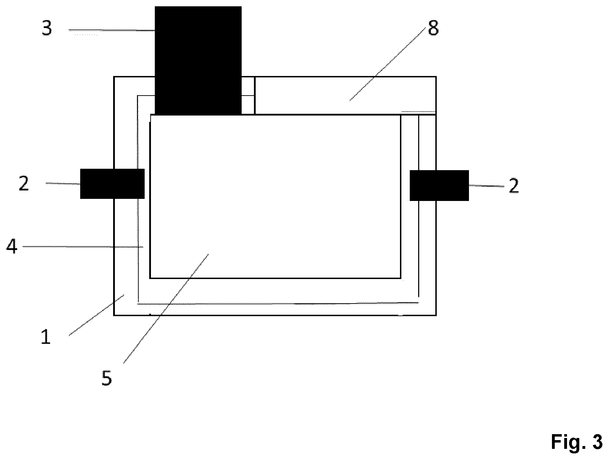

Ausführungsbeispiel 3 wird durch Fig. 3 verdeutlicht. Beschrieben wird eine Transportpfanne für Metallschmelzen. Vorgesehen ist auch ein Feuerfestdeckel 8 aus dem gleichen Material, wie die feuerfeste Auskleidung 4.

## Patentansprüche

1. Vorrichtung zur thermischen Behandlung, Sinterung oder Schmelzen von anorganischen Rohstoffen oder zur Herstellung, Sinterung oder thermischen Nachbehandlung von Keramiken, Feuerfestkeramiken, technischen Keramiken, Baukeramiken, Glas, Zement, Metallen, Verbundwerkstoffen oder kohlenstoffhaltigen oder kohlenstoffgebundenen Erzeugnissen, umfassend
a) eine Oberfläche mit Auskleidung (4),
b) ein elektrisches Heizelement (2), ausgebildet zum Aufheizen der Oberfläche mit Auskleidung auf eine erste niedrige Temperatur im Bereich von 600°C bis < 1200°C, und
c) einen Mikrowellen-Plasmabrenner (3), ausgebildet zum Zuschalten ab der ersten niedrigen Temperatur und Aufheizen der Oberfläche mit Auskleidung auf eine zweite, hohe Temperatur im Bereich von 1200°C bis 2000°C,
wobei das
b) elektrische Heizelement (2) einen Heizelement-Werkstoffverbund umfasst,
wobei der Heizelement-Werkstoffverbund umfasst:
b1) eine keramische Außenschale, und
b2) einem elektrisch leitfähigen Innenkern, auf der Basis einer Keramik, eines Metalls,
Kohlenstoffs oder einer intermetallischen Phase oder einer MAX-Phase oder aus Mischungen davon.

2. Vorrichtung nach Anspruch 1, wobei im Heizelement-Werkstoffverbund des elektrischen Heizelements (2) die keramische Außenschale ausgewählt ist aus SiO₂, Al₂O₃, ZrO₂, Cr2O3, MgO, MgAl₂O₄, La₂O₃, TiO₂, CaO, BaO, Y₂O₃, B₄C, ZrB₂, Si₃N₄, AIN und Mischungen davon.

3. Vorrichtung nach einem der Ansprüche 1 oder 2, wobei der elektrisch leitfähige Innenkern des Heizelement-Werkstoffverbunds enthält:
Keramik wie SiC, LaCrO₃, oder
Metall wie Cu, Fe, Si, Ni, Ti, Mg, Mn, Sn, Zn, Zr, Hf, V, Nb, Ta, Cr, Mo, W, Tc, Re, Pt, oder Kohlenstoff, oder
intermetallischen Phasen wie MoSi₂, NiAl, TiCr₂, TaFeAl, TbAl, TiAl, FeCr, oder MAX-Phasen wie, Ti₂CdC, Sc₂InC, Sc₂SnC,Ti₂AlC, Ti₂GaC, Ti₂InC, Ti₂TlC, V₂AlC, V₂GaC, Cr₂GaC, Ti₂AlN, Ti₂GaN, Ti₂InN, V₂GaN, Cr₂GaN, Ti₂GeC, Ti₂SnC, Ti₂PbC, V₂GeC, Cr₂AlC, Cr₂GeC, V₂PC, V₂AsC, Ti₂SC, Zr₂InC, Zr₂TlC, Nb₂AlC, Nb₂GaC, Nb₂InC, Mo₂GaC, Zr₂InN, Zr₂TlN, Zr₂SnC, Zr₂PbC, Nb₂SnC, Nb₂PC, Nb₂AsC, Zr₂SC, Nb₂SC, Hf₂InC, Hf₂TlC, Ta₂AlC, Ta₂GaC, Hf₂SnC, Hf₂PbC, Hf₂SnN, Hf₂SC, Zr₂AlC, Ti₂ZnC, Ti₂ZnN, V₂ZnC, Nb₂CuC, Mn₂GaC, Mo₂AuC, Ti₂AuN Ti₃AlC₂, Ti₃GaC₂, Ti₃InC₂, V₃AlC₂, Ti₃SiC₂, Ti₃GeC₂, Ti₃SnC₂, Ta₃AlC₂, Ti₃ZnC₂, Zr₃AlC₂ , Ti₄AlN₃, V₄AlC₃, Ti₄GaC₃, Ti₄SiC₃, Ti₄GeC₃, Nb₄AlC₃, Ta₄AlC₃, (Mo,V)₄AlC₃, oder Mischungen daraus.

4. Vorrichtung nach einem der Ansprüche 1 bis 3, wobei der Heizelement-Werkstoffverbund Oxidationsschutzschichten um den elektrisch leitfähigen Innenkern umfasst.

5. Vorrichtung nach einem der Ansprüche 1 bis 4, wobei sowohl elektrisches Heizelement (2) als auch Mikrowellen-Plasmabrenner (3) in die Auskleidung (4) der Oberfläche integriert sind.

6. Verfahren zur thermischen Behandlung, Sinterung oder Schmelzen von anorganischen Rohstoffen oder zur Herstellung, Sinterung oder thermischen Nachbehandlung von Keramiken, Feuerfestkeramiken, technischen Keramiken, Baukeramiken, Glas, Zement, Metallen, Verbundwerkstoffen oder kohlenstoffhaltigen oder kohlenstoffgebundenen Erzeugnissen,
mit dem Schritt: Aufheizen einer Oberfläche mit einer Auskleidung (4),
wobei zum Aufheizen ein elektrisches Heizelement (2) mit einem Mikrowellen-Plasmabrenner (3) kombiniert wird, wobei
das Aufheizen die folgenden beiden Schritte umfasst:
i) Vorheizen mit dem elektrischen Heizelement (2) auf eine erste, niedrige Temperatur im Bereich von 600°C bis < 1200°C, und
ii) Zuschalten des Mikrowellen-Plasmabrenners (3) ab dieser ersten, niedrigen Temperatur und Aufheizen mit dem Mikrowellen-Plasmabrenner (3) auf eine zweite, hohe Temperatur im Bereich von 1200°C bis 2000°C.

7. Verfahren nach einem der Anspruch 6, wobei passive oder aktive Katalysatoren auf die Oberfläche mit der Auskleidung gegeben werden und das Aufheizen mit dem Mikrowellen-Plasmabrenner (3) in Schritt ii) unterstützen.

## Claims

1. Device for the thermal treatment, sintering or melting of inorganic raw materials or for the production, sintering or thermal post-treatment of ceramics, refractory ceramics, technical ceramics, building ceramics, glass, cement, metals, composite materials or carbonaceous or carbon-bonded products, comprising
a) a surface with lining (4),
b) an electric heating element (2) adapted to heat the lined surface to a first low temperature in the range of 600°C to < 1200°C, and
c) a microwave plasma torch (3), designed to be switched on from the first low temperature and to heat the surface with lining to a second, high temperature in the range from 1200°C to 2000°C,
where the
b) electrical heating element (2) comprises a heating element material composite,
wherein the heating element material composite comprises:
b1) a ceramic outer shell, and
b2) an electrically conductive inner core, based on a ceramic, a metal, carbon or an intermetallic phase or a MAX phase or mixtures thereof.

2. Device according to claim 1, wherein in the heating element material composite of the electrical heating element (2), the ceramic outer shell is selected from SiO₃, Al₂O₃, ZrO₃, Cr₂O₃, MgO, MgAl₂O₄, La₂O₃, TiO₂, CaO, BaO, Y₂O₃, B₄C, ZrB₂, Si₃N₄, AIN and mixtures thereof. mixtures thereof.

3. Device according to one of claims 1 or 2, wherein the electrically conductive inner core of the heating element-material composite comprises:
Ceramics such as SiC, LaCrO₃, or
metal such as Cu, Fe, Si, Ni, Ti, Mg, Mn, Sn, Zn, Zr, Hf, V, Nb, Ta, Or, Mo, W, Tc, Re, Pt, or carbon, or
intermetallic phases such as MoSi₂, NiAl, TiCr₂, TaFeAl, TbAl, TiAl, FeCr, or MAX phases such as Ti₂CdC, Sc₂InC, Sc₂SnC, Ti₂AlC, Ti₂GaC, Ti₂InC, Ti₂TlC, V₂AlC, V₂GaC, Cr₂GaC, Ti₂AlN, Ti₂GaN, Ti₂InN, V₂GaN, Cr₂GaN, Ti₂GeC, Ti₂SnC, Ti₂PbC, V₂GeC, Cr₂AlC, Cr₂GeC, V₂PC, V₂AsC, Ti₂SC, Zr₂InC, Zr₂TlC, Nb₂AlC, Nb₂GaC, Nb₂InC, Mo₂GaC, Zr₂InN, Zr₂TlN, Zr₂SnC, Zr₂PbC, Nb₂SnC, Nb₂PC, Nb₂AsC, Zr₂SC, Nb₂SC, Hf₂InC, Hf₂TlC, Ta₂AlC, Ta₂GaC, Hf₂SnC, Hf₂PbC, Hf₂SnN, Hf₂SC, Zr₂AlC, Ti₂ZnC, Ti₂ZnN, V₂ZnC, Nb₂CuC, Mn₂GaC, Mo₂AuC, Ti₂AuN Ti₃AlC₂, Ti₃GaC₂, Ti₃InC₂, V₃AlC₂, Ti₃SiC₂, Ti₃GeC₂, Ti₃SnC₂, Ta₃AlC₂, Ti₃ZnC₂, Zr₃AlC₂ , Ti₄AlN₃, V₄AlC₃, Ti₄GaC₃, Ti₄SiC₃, Ti₄GeC₃, Nb₄AlC₃, Ta₄AlC₃, (Mo,V)₄AlC₃, or mixtures thereof.

4. Device according to any one of claims 1 to 3, wherein the heating element-material composite comprises oxidation protection layers around the electrically conductive inner core.

5. Device according to one of claims 1 to 4, wherein both the electric heating-element (2) and the microwave plasma torch (3) are integrated in the lining (4) of the surface.

6. Method for the thermal treatment, sintering or melting of inorganic raw materials or for the production, sintering or thermal post-treatment of ceramics, refractory ceramics, technical ceramics, construction ceramics, glass, cement, metals, composite materials or carbon-containing or carbon-bonded products,
with the step: Heating a surface with a lining (4),
wherein for heating purposes an electric heating element (2) is combined with a microwave plasma burner (3), wherein
heating comprises the following two steps:
i) preheating with the electric heating element (2) to a first, low temperature in the range from 600°C to < 1200°C, and
ii) Switching on the microwave plasma burner (3) and heating from this first, low temperature with the microwave plasma burner (3) to a second, high temperature in the range from 1200°C to 2000°C.

7. Method according to claim 6, wherein passive or active catalysts are added to the surface with the lining and support the heating with the microwave plasma torch (3) in step ii).

## Revendications

1. Dispositif pour le traitement thermique, le frittage ou la fusion de matières premières inorganiques ou pour la fabrication, le frittage ou le post-traitement thermique de céramiques, de céramiques réfractaires, de céramiques techniques, de céramiques de construction, de verre, de ciment, de métaux, de matériaux composites ou de produits carbonés ou à liant carboné, comprenant
a) une surface avec un revêtement (4),
b) un élément chauffant électrique (2) adapté pour chauffer la surface avec revêtement à une première basse température dans la plage de 600°C à < 1200°C, et
c) une torche à plasma à micro-ondes (3) conçue pour être activée à partir de la première basse température et pour chauffer la surface avec revêtement à une deuxième température élevée dans la plage de 1200°C à 2000°C,
dans lequel
b) l'élément chauffant électrique (2) comprend un matériau composite d'élément chauffant-,
dans lequel le matériau composite d'élément chauffant comprend :
b1) une coque extérieure en céramique, et
b2) un noyau interne électriquement conducteur, à base d'une céramique, d'un métal, de
carbone ou d'une phase intermétallique ou d'une phase MAX ou de leurs mélanges.

2. Dispositif selon la revendication 1, dans lequel, dans le matériau composite d'élément chauffant- de l'élément chauffant électrique (2), la coque externe en céramique est choisie parmi SiO₂, Al₂O₃, ZrO₂, Cr2O3, MgO, MgAl₂O₄, La₂O₃, TiO₂, CaO, BaO, Y₂O₃, B₄C, ZrB₂, Si₃N₄, AIN et leurs mélanges.

3. Dispositif selon l'une des revendications 1 ou 2, dans lequel le noyau interne électriquement conducteur du matériau composite d'élément chauffant contient :
Céramique telle que SiC, LaCrO₃, ou
métal tel que Cu, Fe, Si, Ni, Ti, Mg, Mn, Sn, Zn, Zr, Hf, V, Nb, Ta, Cr, Mo, W, Tc, Re, Pt, ou carbone, ou
des phases intermétalliques comme MoSi₂, NiAl, TiCr₂, TaFeAl, TbAl, TiAl, FeCr, ou des phases MAX comme, Ti₂CdC, Sc₂InC, Sc₂SnC,Ti₂AlC, Ti₂GaC, Ti₂InC, Ti₂TlC, V₂AlC, V₂GaC, Cr₂GaC, Ti₂AlN, Ti₂GaN, Ti₂InN, V₂GaN, Cr₂GaN, Ti₂GeC, Ti₂SnC, Ti₂PbC, V₂GeC, Cr₂AlC, Cr₂GeC, V₂PC, V₂AsC, Ti₂SC, Zr₂InC, Zr₂TlC, Nb₂AlC, Nb₂GaC, Nb₂InC, Mo₂GaC, Zr₂InN, Zr₂TlN, Zr₂SnC, Zr₂PbC, Nb₂SnC, Nb₂PC, Nb₂AsC, Zr₂SC, Nb₂SC, Hf₂InC, Hf₂TlC, Ta₂AlC, Ta₂GaC, Hf₂SnC, Hf₂PbC, Hf₂SnN, Hf₂SC, Zr₂AlC, Ti₂ZnC, Ti₂ZnN, V₂ZnC, Nb₂CuC, Mn₂GaC, Mo₂AuC, Ti₂AuN Ti₃AlC₂, Ti₃GaC₂, Ti₃InC₂, V₃AlC₂, Ti₃SiC₂, Ti₃GeC₂, Ti₃SnC₂, Ta₃AlC₂, Ti₃ZnC₂, Zr₃AlC₂ , Ti₄AlN₃, V₄AlC₃, Ti₄GaC₃, Ti₄SiC₃, Ti₄GeC₃, Nb₄AlC₃, Ta₄AlC₃, (Mo,V)₄AlC₃, ou leurs mélanges.

4. Dispositif selon l'une des revendications 1 à 3, dans lequel le matériau composite d'élément chauffant comprend des couches de protection contre l'oxydation autour du noyau interne électriquement conducteur.

5. Dispositif selon l'une des revendications 1 à 4, dans lequel à la fois l'élément chauffant électrique (2) et la torche à plasma à micro-ondes (3) sont intégrés dans le revêtement (4) de la surface.

6. Procédé de traitement thermique, de frittage ou de fusion de matières premières inorganiques ou de fabrication, de frittage ou de post-traitement thermique de céramiques, de céramiques réfractaires, de céramiques techniques, de céramiques de construction, de verre, de ciment, de métaux, de matériaux composites ou de produits carbonés ou à liant carboné,
comprenant l'étape : chauffer une surface avec un revêtement (4),
dans lequel, pour le chauffage, un élément chauffant électrique (2) est combiné avec une torche à plasma à micro-ondes (3), dans lequel
le chauffage comprend les deux étapes suivantes :
i) préchauffage avec l'élément chauffant électrique (2) à une première température basse dans la plage de 600°C à < 1200°C, et
ii) mise en marche de la torche à plasma micro-ondes (3) à partir de cette première température basse et chauffage avec la torche à plasma micro-ondes (3) à une deuxième température élevée dans la plage de 1200°C à 2000°C.

7. Procédé selon l'une des revendication 6, dans lequel des catalyseurs passifs ou actifs sont ajoutés sur la surface avec le revêtement et aident au chauffage avec la torche à plasma à micro-ondes (3) à l'étape ii).
